(19) Europäisches Patentamt
European Patent Office
Office européen des brevets

(11) **EP 1 588 612 A1**

(12) **EUROPEAN PATENT APPLICATION**
published in accordance with Art. 158(3) EPC

(43) Date of publication:
26.10.2005 Bulletin 2005/43

(51) Int Cl.7: **A01K 87/00**

(21) Application number: 04703261.0

(22) Date of filing: 19.01.2004

(86) International application number:
**PCT/JP2004/000373**

(87) International publication number:
**WO 2004/064512 (05.08.2004 Gazette 2004/32)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 24.01.2003 JP 2003000688

(71) Applicant: SHIMANO INC.
Sakai-shi, Osaka 590-8577 (JP)

(72) Inventors:
• KAWASHITA, Gouki
Sakai-shi, Osaka 5908577 (JP)
• OKADA, Muneki
Sakai-shi, Osaka 5908577 (JP)

• KISHIMOTO, Toshihisa
Sakai-shi, Osaka 5908577 (JP)
• KANAZAWA, Masahide
Sakai-shi, Osaka 5908577 (JP)
• MORITA, Atsushi
Sakai-shi, Osaka 5908577 (JP)
• OKUDA, Ryozo
Sakai-shi, Osaka 5908577 (JP)

(74) Representative: Hofmann, Harald
Sonnenberg Fortmann,
Patent- und Rechtsanwälte,
Herzogspitalstrasse 10a
80331 München (DE)

(54) **METHOD OF MANUFACTURING FISHING ROD**

(57)    The present invention provides a method that industrially manufactures a fishing rod capable of providing preferable characteristics (Choshi) of rod similar to a fishing rod composed of a natural material. In addition, a fishing rod capable of providing arbitrary "characteristics of rod" can be industrially manufactured. The method comprises steps of calculating a required weight balance of the rod after specifying the primary resonance frequency of the fishing rod in the state where a plurality of rod bodies are connected to each other as one fishing rod; and forming the rod bodies that are tubular members composing the fishing rod by burning a prepreg material that is wound around a core member and is adjusted to weight distribution in the axial direction of the prepreg material to achieve the calculated weight balance.

Fig. 3

**Description**

[Technical Field]

The present invention relates to a method for manufacturing a fishing rod, and more particularly to a method for manufacturing a fishing rod composed of a fiber reinforced resin in which reinforced fiber, such as carbon fiber and glass fiber, is impregnated with a synthetic resin.

[Background Art]

In recent years, a fishing rods composed of a fiber reinforced resin material in which reinforced fiber, such as carbon fiber and glass fiber, is impregnated with a synthetic resin is popular. Employing this type of material improves weight reduction and physical strength, and so on. In addition, not only weight reduction, physical strength, and so on, but also bending characteristics, rigidity, restitution characteristics, and so on, that have an effect on operativity in casting tackle of fishing rod or catching fish are considered as important factors in a fishing rod. For this reason, the diameter, thickness, and so on, of fishing rod are adjusted to provide preferable characteristics of fishing rod ("Choshi" of rod).

For example, the following techniques are proposed. In one technique, a fiber reinforced resin material for manufacturing a rod body is wound so as to be partially overlaid thereon (for example, see Japanese: unexamined patent application No. 2002-209477, Fig. 2). In another technique, fiber reinforced resin materials with different elasticities are wound on axially different parts (for example, see Japanese unexamined patent application No. H11-289925, Fig. 2).

On the other hand, a fishing rod composed of a natural material, such as natural bamboo, is one of the most preferable fishing rods that satisfy anglers in terms of "characteristics of rod". However various techniques have been developed to provide a fishing rod that is manufactured from a fiber reinforced resin material and has preferable "characteristics of rod" as mentioned above, they have not yet achieved "characteristics of rod" similar to a fishing rod composed of a natural material that anglers want.

That is, although settings of various parameters, such as the thickness of rod body, the modulus of elasticity of material, and the orientation ways of fiber is changed in an attempt to achieve preferable "characteristics of rod", this does not sufficiently provide a fishing rod that satisfies anglers.

An object of the present invention is to provide a method that industrially manufactures a fishing rod capable of providing preferable characteristics of rod similar to a fishing rod composed of a natural material. Furthermore, another object of the present invention is to provide a method that can industrially manufacture a fishing rod with arbitrary characteristics of rod.

[Disclosure of the Invention]

The inventors of the present invention have been diligently studied to solve the above problem, and, as a result, found that the resonance vibration characteristics of fishing rod was one of important factors that satisfy anglers in terms of "characteristics of rod".

The resonance vibration characteristics refer to a resonance frequency and a shape in resonance vibration mode (particularly, the positions of antinode and node). The resonance vibration characteristics are specified by the weight distribution and flexural rigidity distribution of fishing rod.

The present invention have been made on basis the findings, and provide a method for manufacturing a fishing rod with prescribed resonance vibration characteristics by previously specifying any of the primary to third resonance frequencies. Furthermore, the present invention provides a method for manufacturing a fishing rod with prescribed resonance vibration characteristics in additional consideration of flexural rigidity of fishing rod in a fishing rod to be configured. A fishing rod manufactured by specifying its resonance vibration characteristics will exhibit any of the primary to third resonance vibrations at a certain frequency. Additionally, it has prescribed flexural rigidity.

(Resonance Frequency)

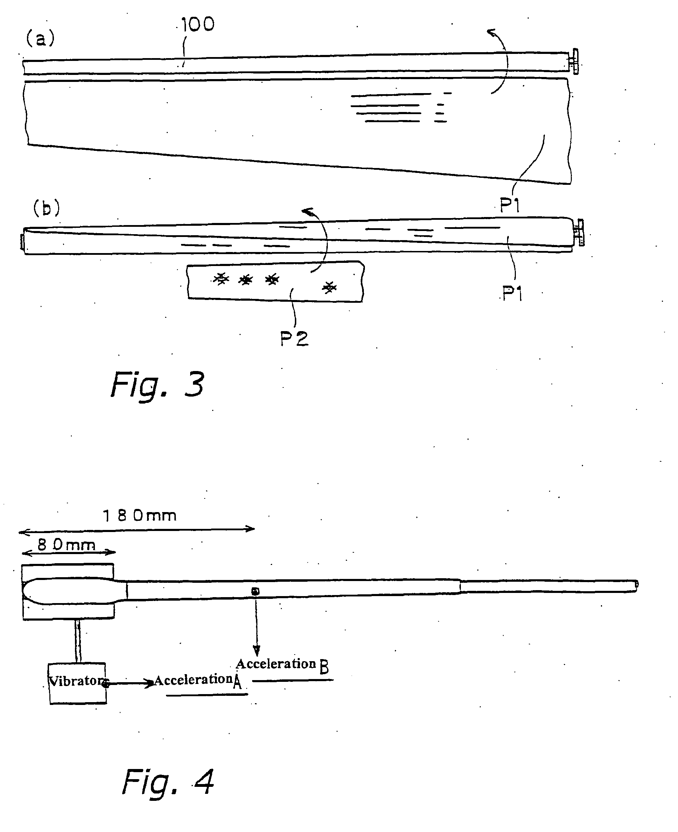

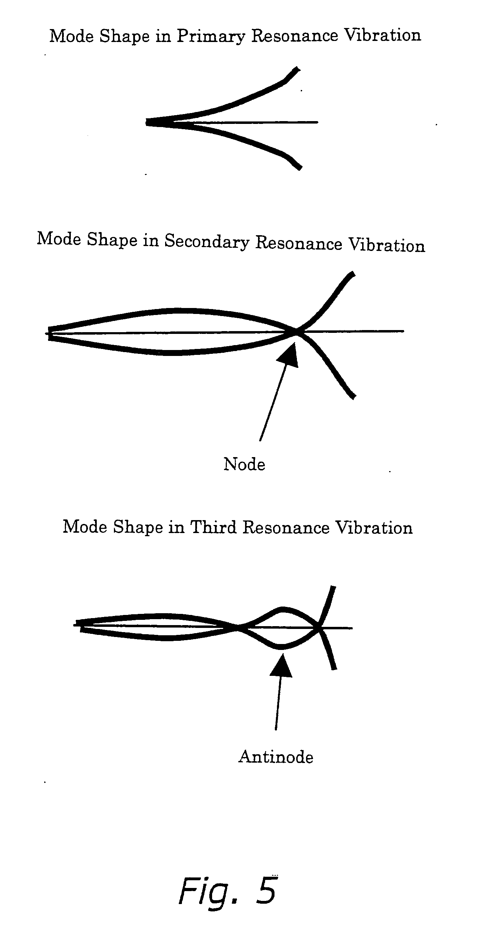

The "primary to third resonance frequencies" refer to frequencies of a fishing rod measured by the following method. First, a sandwich member sandwiches and secures a fishing rod in the range of 80 mm from the handle-end side end thereof as a fixed ends. The fore side end is left as a free end. The fishing rod is maintained in the horizontal direction. A vibrator vibrates the fishing rod via this sandwich member (frequency of fishing rod). An acceleration sensor senses the acceleration of this vibrator and obtains an input acceleration value (A). On the other hand, the acceleration sensor senses the acceleration at the position of 180 mm from the handle-end side end of the fishing rod and obtains the output acceleration value (B) (see Fig. 4). The ratios of B/A are plotted in coordinates with one axis of the frequency of fishing rod. The frequencies in the states where the ratios of B/A reach peaks (resonance vibration state) are obtained as the primary, secondary and third resonance frequencies in the increasing order of the frequencies of fishing rod. Fig. 5 shows shapes of the primary to third resonance vibration modes of a fishing rod for reference purposes.

In addition, an example of graph of the ratios of B/A plotted in coordinates with one axis of the frequency of fishing rod is shown below (this table 1 is only illustrative, but not shows the specific values in this invention).

(TABLE 1)

For example, the resonance frequency of a fishing rod with target preferable characteristics of rod is previously measured, thus, a fishing rod to be manufactured is designed so as to have the corresponding resonance vibration characteristics. As a result, it is possible to industrially mass-produce fishing rods with target characteristics of rod.

The relationship between them changes depending on various factors, such as the overall length of a fishing rod, a material, thickness, taper, weight distribution, and so on, of rod bodies that compose the fishing rod. Accordingly, the weight distribution in each rod body is calculated by simulation based on variation of diameter in the axial direction of the rod body to be configured, length, elasticity of prepreg material, weight, and so on, so that the frequency of the fishing rod in any of the primary to third resonance vibrations (resonance frequency) is a specified frequency (in other words, so that the fishing rod has the prescribed resonance vibration characteristics). The target weight distribution is then achieved based on the material arrangement, the specific gravity of material, and so on, to achieve the prescribed resonance characteristics, thus, a fishing rod with preferable "characteristics of rod" is designed.

Specifically, a method for manufacturing a fishing rod, of one aspect of the present invention, including a plurality of connected rod bodies comprises steps of calculating weight balance of the rod bodies required for resonance characteristics in the primary resonance vibration of the fishing rod in the state where the plurality of rod bodies are connected to each other as one fishing rod after specifying the resonance characteristics; and forming the rod bodies that are tubular members composing the fishing rod by burning a prepreg material that is wound around a core member and is adjusted to weight distribution in the axial direction of the prepreg material to achieve the calculated weight balance.

A method for manufacturing a fishing rod, of another aspect of the present invention, including a plurality of connected rod bodies comprises steps of calculating weight balance of the rod bodies required for resonance characteristics in the secondary resonance vibration of the fishing rod in the state where the plurality of rod bodies are connected to each other as one fishing rod after specifying the resonance characteristics; and forming the rod bodies that are tubular members composing the fishing rod by burning a prepreg material that is wound around a core member and is adjusted to weight distribution in the axial direction of the prepreg material to achieve the calculated weight balance.

A method for manufacturing a fishing rod, of still another aspect of the present invention, including a plurality of connected rod bodies comprises steps of calculating weight balance of the rod bodies required for resonance characteristics in the third resonance vibration of the fishing rod in the state where the plurality of rod bodies are connected to each other as one fishing rod after specifying the resonance characteristics; and forming the rod bodies that are tubular members composing the fishing rod by burning a prepreg material that is wound around a core member and is adjusted to weight distribution in the axial direction of the prepreg material to achieve the calculated weight balance.

In addition, in the step of forming the rod bodies, the prepreg material may be wound around the core member and adjusted to the weight distribution in the axial direction by partially winding a prepreg material with high specific gravity on or above the outer periphery of the prepreg material.

(Flexural Rigidity)

Additionally, in a method of another aspect of the present invention, not only the weight balance is measured as mentioned above, but the flexural rigidity of a fishing rod with target preferable characteristics of rod is measured by the following method. Rod bodies of the fishing rod to be manufactured are designed so as to have prescribed flexural rigidity, thus, the present invention can provide a method for manufacturing a fishing rod with the prescribed resonance vibration characteristics. That is, according to the present invention, it is possible to industrially mass-produce fishing rods with target characteristics of rod.

The flexural rigidity of a fishing rod varies depending on various factors, such as a material (a fiber reinforced resin, so-called as prepreg material), thickness, taper, and so on, of the rod bodies that compose the fishing rod. Accordingly, variation of diameter in the axial direction of the rod body that composes the fishing rod, length, elasticity of prepreg material (particularly, elasticity of reinforced fiber drawn to be aligned in the axial direction in the prepreg material), and so on, are selected so that the fishing rod has the prescribed flexural rigidity.

In addition, this flexural rigidity of fishing rod has an effect on the aforementioned resonance vibration characteristics, and is a factor that specifies the resonance vibration characteristics. For this reason, the weight distribution in each rod body and additionally the flexural rigidity of the fishing rod are calculated by simulation so that the resonance vibration characteristics of the fishing rod in any of the primary to third resonance vibrations are the specified resonance vibration characteristics. The target weight distribution is then achieved based on the material arrangement, the specific gravity of material, and so on, thus, the fishing rod is designed.

A method for manufacturing a fishing rod, of one aspect of the present invention, including a plurality of connected rod bodies comprises steps of specifying flexural rigidity by selecting a prepreg material that composes a material, and calculating weight balance of the rod bodies required for resonance characteristics in the primary resonance vibration of the fishing rod in the state where the plurality of rod bodies are connected to each other as one fishing rod after specifying the resonance characteristics; and forming the rod bodies that are tubular members composing the fishing rod by burning the selected prepreg material that is wound around a core member and is adjusted to weight distribution in the axial direction of the prepreg material to achieve the calculated weight balance.

A method for manufacturing a fishing rod, of another aspect of the present invention, including a plurality of connected rod bodies comprises steps of specifying flexural rigidity by selecting a prepreg material that composes a material, and calculating weight balance of the rod bodies required for resonance characteristics in the secondary resonance vibration of the fishing rod in the state where the plurality of rod bodies are connected to each other as one fishing rod after specifying the resonance characteristics; and forming the rod bodies that are tubular members composing the fishing rod by burning the selected prepreg material that is wound around a core member and is adjusted to weight distribution in the axial direction of the prepreg material to achieve the calculated weight balance.

A method for manufacturing a fishing rod, of still another aspect of the present invention, including a plurality of connected rod bodies comprises steps of specifying flexural rigidity by selecting a prepreg material that composes a material, and calculating weight balance of the rod bodies required for resonance characteristics in the third resonance frequency of the fishing rod in the state where the plurality of rod bodies are connected to each other as one fishing rod after specifying the resonance characteristics; and forming the rod bodies that are tubular members composing the fishing rod by burning the selected prepreg material that is wound around a core member and is adjusted to weight distribution in the axial direction of the prepreg material to achieve the calculated weight balance.

[Brief Description of the Drawings]

Fig. 1 is a view showing the whole fishing rod according to one embodiment.
Fig. 2 is a cross-sectional view of an intermediate rod 2 of Fig. 1.
Fig. 3 is a view showing a manufacturing process of the rod body of Fig. 2.
Fig. 4 is a view showing a measurement state of resonance frequency of a fishing rod according to the present invention.
Fig. 5 shows shapes of the primary to third resonance vibration modes of a fishing rod.
Fig. 6 is a reference view in a finite element model.
Fig. 7 is a reference view in a link model.

Fig. 8 is a graph showing the result of regression analysis in coordinates with the horizontal axis of evaluation of the characteristics of fishing rod by anglers and the vertical axis of "Choshi" index.

[Best Mode of Carrying Out the Invention]

A fishing rod in which one embodiment of the present invention is adopted is described.

(Structure of Hera Fishing Rod)

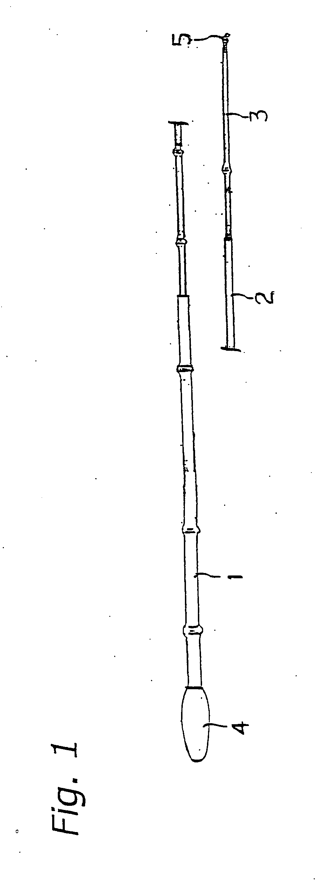

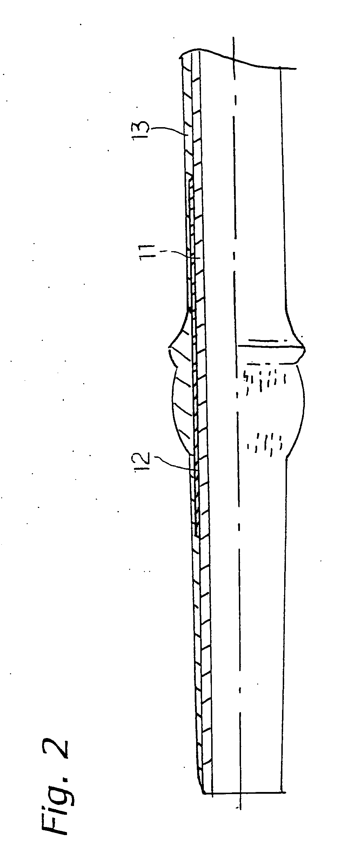

The fishing rod is a hera fishing rod used for hera-crucian fishing. The fishing rod includes three rod bodies of a base rod 1, an intermediate rod 2, and a fore end rod 3 in order from the handle end side, as shown in Fig. 1. These rod bodies are formed by burning a prepreg material reinforced fiber, such as carbon fiber or glass fiber, impregnated with a synthetic resin. As discussed later, prepreg with high specific gravity is partially laminated. These rod bodies are coated to have fake natural bamboo appearance. For example, a knot or a branch trace of bamboo can be formed by three-dimensional coating (see Fig. 2).
The rod bodies are successively connected in a so-called put-over joint manner. For example, the handle-end side end of the intermediate rod 2 is partially inserted into the fore side end of the base rod 1, thus they are connected to each other. But a joint manner for connecting these rod bodies is not limited to a put-over joint. Needless to say, known joints (for example, telescopic joint, spigot joint, and so on) can be applied. In addition, a grip 4 formed by winding a tape-shaped material impregnated with a urethane resin, or the like, is provided on the handle-end side end of the base rod 1, while a fishing line interlock 5 is attached to the fore side end of the fore end rod 3. In the state where these three rod bodies are connected successively, the overall length of hera fishing rod is 9 shaku (2700 mm).
With reference to Fig. 2, the intermediate rod 2 is described as exemplary example of the structure of rod bodies that compose this hera fishing rod.
The intermediate rod 2 includes a main layer 11, a weight layer 12 laminated in a certain range in the axial direction as an outer periphery layer of the main layer 11, and a coating layer 13 laminated on or above the outer periphery of these main layer 11 and weight layer 12.
The main layer 11 is a layer composed of a laminated prepreg material. In this case, one kind or two different kinds of prepreg material(s) can be laminated. For example, tape-shaped and sheet-shaped prepreg materials in which carbon fiber is impregnated with an epoxy resin can be given as the material. In the tape-shaped prepreg material, the carbon fiber is oriented in the circumferential direction or in the direction that extends at a certain angle relative to the circumferential direction. In the sheet-shaped prepreg material, carbon fiber is oriented in the axial direction.
The weight layer 12 is composed of a prepreg material with high specific gravity. The prepreg material with high specific gravity is a material in which glass scrim impregnated with an epoxy resin and metal powder such as tungsten are mixed, for example. This prepreg material with high specific gravity has an extent of 500 to 600 g/mm$^2$, and of thickness of 0.100 to 0.150 mm. This prepreg material with high specific gravity is laminated on the aforementioned main layer 11 in a prescribed axial location calculated as discussed later.
The coating layer 13 is formed by applying a synthetic resin coating material, such as epoxy resin and urethane resin. The stepped difference between the main layer 11 and the weight layer 12 is canceled by this coating layer 13. In the case where a knot of bamboo is formed on the intermediate rod 2 to have fake natural bamboo appearance as shown in Fig. 2, a prepreg material is partially wound and burned, or an epoxy resin is applied thickly, and it is cuts off in a prescribed shape to form a knot of bamboo, and so on. Although other rod bodies have different diameters, and so on, they have similar structure, thus, their description is omitted.

(First Method for Manufacturing Hera Fishing Rod)

A first method for manufacturing this hera fishing rod is described.
As for the resonance vibration characteristics, for example, several hera fishing rods with different resonance vibration characteristics are manufactured, and feeling test in which anglers practically use them, thus, values, and so on, in fishing rods that satisfy anglers in terms of the characteristics of rod are adopted. Values of hera fishing rod composed of natural bamboo that satisfies many anglers in terms of characteristics of rod may be adopted as target values. As a target relationship between the overall length and the resonance frequency of a fishing rod, the case where the overall length is 2700 mm and the secondary resonance frequency is set to 5.45 Hz is described, for example.
First, the weight balance of a rod body is calculated so that the secondary resonance frequency of the fishing rod is 5.45 Hz when the target base rod 1 to fore end rod 3 are connected to each other as one hera fishing rod. That is, in consideration of target diameters and lengths of base rod 1 to the fore end rod 3, elasticities and weights of a prepreg material and a prepreg material with high specific gravity, and so on, the weight distribution in the rod bodies that provide 5.45 Hz of frequency (resonance frequency) of the fishing rod in the secondary resonance vibration is simulated, then the axial range where the aforementioned prepreg material with high specific gravity should be laminated is calculated for every rod body. In order to simulate such weight distribution, techniques, such as finite element method or link model, can be used.

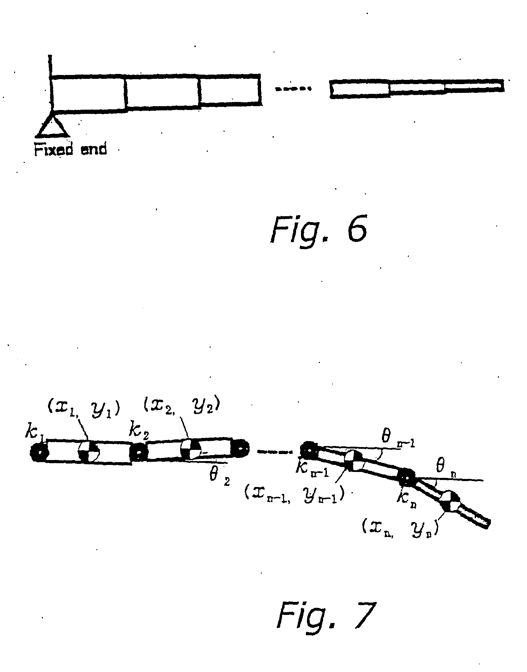

For example, in analysis by a finite element method, as shown in Fig. 6, the fishing rod is modeled by using an elastic cantilever composed of N of one-dimensional cantilever elements that have two degrees of freedom of the translational direction and the rotational direction at node. It is assumed that each cantilever element is uniform inside the element in cross section. Under the boundary condition in the state where one end is an fixed end and the other end is a free end, the resonance frequency and the mode shape corresponding to it are calculated.

In analysis by a link model, since a fishing rod largely deforms in use, the fishing rod is modeled by using multibody dynamics corresponding to large deformation (geometric nonlinearity). As shown in Fig. 7, in this case, the fishing rod is modeled by using a multibody composed of N of rigid body links with rotation spring at node. The fishing rod is modeled by using a link model, thus, the posture angle between rigid body links adjacent to each other is not limited. Accordingly, it is possible to express even large deformation. The equation of motion of the fishing rod can be represented by Equation 1 under the constraint condition.

## (EQUATION 1)

$$\begin{bmatrix} \mathbf{M} & \Phi_q^T \\ \Phi_q & \mathbf{0} \end{bmatrix} \begin{Bmatrix} \ddot{q} \\ \lambda \end{Bmatrix} = \begin{Bmatrix} \mathbf{Q} \\ \gamma \end{Bmatrix}$$

Subsequently, as shown in Fig. 3(a), a mandrel 100 that corresponds to diameter or taper variation of each rod body is wound with a necessary prepreg material P1 (a tape-shaped or sheet-shaped material can be wound as discussed above), and a prepreg material with high specific gravity P2 is wound around the prescribed axial range that is calculated as discussed above (Fig. 3(b)). In order to sufficiently provide weight, several plies of the prepreg material with high specific gravity P2 may be wound. Although only one sheet of prepreg material with high specific gravity P2 is wound on the prepreg material P1 in Fig. 3(b), two or more sheets of prepreg materials with high specific gravity P2 may be wound so as to be spaced from each other in the axial direction.

In addition, rod materials corresponding to the base rod 1 to the fore end rod 3 are produced, respectively. These are burned in a furnace. After burning, each rod material is subjected to polish processing on its outer periphery, and is cut at both ends to have a prescribed axial length. Thus, rod bodies are produced.

In this embodiment, the case where the fishing rod is adjusted based on the resonance vibration characteristics in the secondary resonance vibration is illustrated, however, a fishing rod may be adjusted based on the resonance vibration characteristics in the primary or third resonance vibration. In this case, similarly to the aforementioned method, the primary or third resonance frequency of the target fishing rod is measured, then the weight distribution in each rod body is simulated by using this as a target. Thus, the axial range where the aforementioned prepreg material with high specific gravity should be laminated is calculated for each rod body.

In addition, in this embodiment, although this description describes a hera fishing rod, a type of fishing rod is not limited to this. Even in the case of a fishing rod other than hera fishing rod, since, generally, the "characteristics of rod" is an important factor in a fishing rod, needless to say, the present invention can be applied to other types of fishing rods. It is very effective to apply the present invention to a fly fishing rod, a lure fishing rod, and so on, for example.

(Second Method for Manufacturing Hera Fishing Rod)

A second method for manufacturing a hera fishing rod is described.

This method for manufacturing a fishing rod provides a fishing rod with characteristics of rod that anglers desire.

Particularly, in a hera fishing rod, expressions of fore-side balance characteristics (Saki-Choshi), middle balance characteristics (Moto-Choshi), and handle-side balance characteristics (Dou-Choshi) are used to express the balance of rod. The fore-side balance characteristics refer to characteristics of a fishing rod that has preferable flexibility particularly in its fore side. The middle balance characteristics refer to characteristics of a fishing rod that has preferable flexibility particularly in the axial central part. The handle-side balance characteristics refer to characteristics of a fishing rod that has preferable flexibility particularly in its handle side. The anglers choose hera fishing rods with their favorite characteristics of rod. In this manufacturing method, the aforementioned resonance vibration characteristics are specified in additional consideration of the flexural rigidity of fishing rod, thus, a fishing rod with prescribed characteristics of rod is manufactured.

Specifically, this manufacturing method is similar to the aforementioned first manufacturing method. That is, similarly to the aforementioned first manufacturing method, in consideration of target diameters and lengths of base rod 1 to the fore end rod 3, elasticities and weights of a prepreg material and a prepreg material with high specific gravity, additionally, the kind of reinforced fiber that is oriented in the axial direction of the prepreg material, the content of the reinforced fiber, and so on, the weight distribution and the flexural rigidity in the rod bodies that provide prescribed values of resonance characteristics of the fishing rod in the primary resonance vibration, or the secondary or third resonance vibration are simulated, then the axial range where the aforementioned prepreg material with high specific gravity should be laminated is calculated for every rod body. In order to simulate such weight distribution, techniques, such as finite element method or link model, can be used.

Subsequently, on the basis of the weight distribution, and so on, calculated by simulation, similarly to the aforementioned first manufacturing method, a necessary prepreg material is wound on a mandrel and burned, thus, each rod body is manufactured.

Furthermore, specifically, the following description describes a method that manufactures a fishing rod particularly in consideration of flexural rigidity index as another manufacturing method.

First, "flexural rigidity" is converted into a numerical value. Hereinafter, the "flexural rigidity index" refers to the numerical value converted from flexural rigidity. In the present invention, the "flexural rigidity index" is measured and calculated by the following method.

This numerical value is calculated by the following Equation 2 in the state where, in a fishing rod composed of a plurality of connected rod bodies, its handle end is secured so that its fore end is directed at an angle of 75° relative to horizontal direction, then the fishing rod is bent by attaching a weight of 200 g to the fore end of the fishing rod.

(EQUATION 2)

$$\text{(Flexural Rigidity Index)} = \frac{\text{(Hor. Distance bet. Fore End and Handle End)}}{\text{(Overall Length of Fishing Rod)}}$$

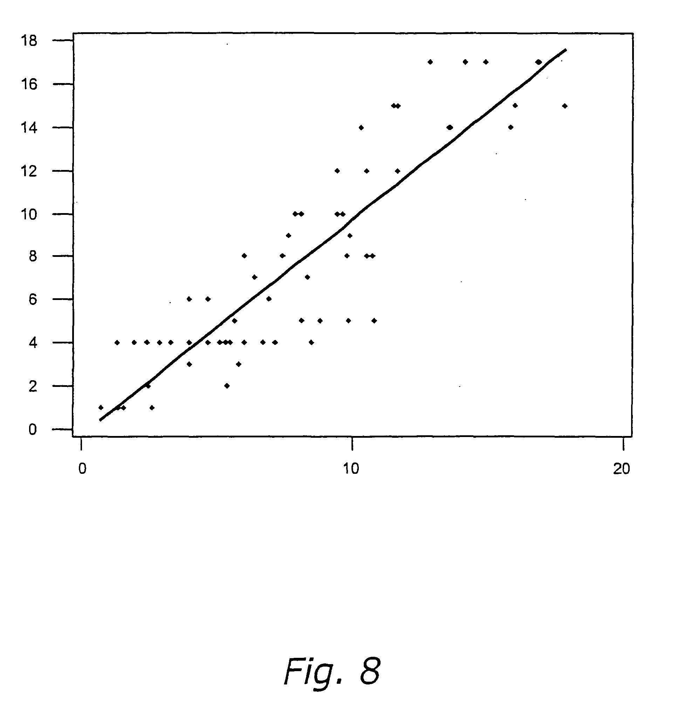

In addition, as for about eighty of commercially available fishing rods, a) flexural rigidity indices, b) secondary resonance vibration characteristics, and c) third resonance vibration characteristics were measured. An extent of correlation between these values and the evaluations of the characteristics of fishing rod by the anglers was analyzed. Thus, "Choshi index" that represented the characteristics of fishing rod providing good correlation between the evaluations of the characteristics of fishing rod by the anglers and the aforementioned three factors was obtained. Fig. 8 is a graph showing the analysis result that represents the correlation.

The secondary and third resonance vibration characteristics can be calculated based on the weight balance of rod body, and the flexural rigidity of rod body. That is, similarly to the aforementioned first manufacturing method, in consideration of target diameters and lengths of base rod 1 to the fore end rod 3, elasticities and weights of a prepreg material and a prepreg material with high specific gravity, additionally, the kind of reinforced fiber that is oriented in the axial direction of the prepreg material, the content of the reinforced fiber, and so on, the weight distribution in the rod bodies that provide prescribed values of resonance characteristics of the fishing rod in the secondary and third resonance vibrations is simulated, then the axial range where the aforementioned prepreg material with high specific gravity should be laminated is calculated for every rod body. In order to simulate such weight distribution, techniques, such as finite element method or link model, can be used.

On the basis of the weight distribution, and so on, calculated by simulation, similarly to the aforementioned first manufacturing method, a necessary prepreg material is wound and burned on a mandrel, thus, each rod body is manufactured.

[Industrial Applicability]

According to the present invention, it is possible to industrially manufacture a fishing rod capable of providing preferable "characteristics of rod" similar to a fishing rod composed of a natural material. In addition, it is possible to industrially manufacture a fishing rod that can provide arbitrary desired "characteristics of rod".

Furthermore, a relationship between the specific characteristics of each fishing rod and its resonance vibration characteristics is shown for a user who wants to buy a fishing rod, thus, he can buy a fishing rod with the "characteristics of rod" that he requires. For example, the user can easily buy a fishing rod with the "characteristics of rod" different from a fishing rod that he already has, or a fishing rod with the "characteristics of rod" similar to a fishing rod that he previously had but was broken.

**Claims**

1. A method for manufacturing a fishing rod including a plurality of connected rod bodies comprising steps of:

   calculating weight balance of the rod bodies required for resonance characteristics in the primary resonance vibration of the fishing rod in the state where the plurality of rod bodies are connected to each other as one fishing rod after specifying the resonance characteristics; and
   forming the rod bodies that are tubular members composing the fishing rod by burning a prepreg material that is wound around a core member and is adjusted to weight distribution in the axial direction of said prepreg material to achieve said calculated weight balance.

2. A method for manufacturing a fishing rod including a plurality of connected rod bodies comprising steps of:

   calculating weight balance of the rod bodies required for resonance characteristics in the secondary resonance vibration of the fishing rod in the state where the plurality of rod bodies are connected to each other as one fishing rod after specifying the resonance characteristics; and
   forming the rod bodies that are tubular members composing the fishing rod by burning a prepreg material that is wound around a core member and is adjusted to weight distribution in the axial direction of said prepreg material to achieve said calculated weight balance.

3. A method for manufacturing a fishing rod including a plurality of connected rod bodies comprising steps of:

   calculating weight balance of the rod bodies required for resonance characteristics in the third resonance vibration of the fishing rod in the state where the plurality of rod bodies are connected to each other as one fishing rod after specifying the resonance characteristics; and
   forming the rod bodies that are tubular members composing the fishing rod by burning a prepreg material that is wound around a core member and is adjusted to weight distribution in the axial direction of said prepreg material to achieve said calculated weight balance.

4. The method for manufacturing a fishing rod set forth in any of claims 1 to 3, wherein in said step of forming the rod bodies, the prepreg material is wound around the core member and is adjusted to the weight distribution in the axial direction by partially winding a prepreg material with high specific gravity on or above the outer periphery of said prepreg material.

5. A method for manufacturing a fishing rod including a plurality of connected rod bodies comprising steps of:

   specifying flexural rigidity by selecting a prepreg material that composes a material, and calculating weight balance of the rod bodies required for resonance characteristics in the primary resonance vibration of the fishing rod in the state where the plurality of rod bodies are connected to each other as one fishing rod after specifying the resonance characteristics; and
   forming the rod bodies that are tubular members composing the fishing rod by burning said selected prepreg material that is wound around a core member and is adjusted to weight distribution in the axial direction of said prepreg material to achieve said calculated weight balance.

6. A method for manufacturing a fishing rod including a plurality of connected rod bodies comprising steps of:

   specifying flexural rigidity by selecting a prepreg material that composes a material, and calculating weight balance of the rod bodies required for resonance characteristics in the secondary resonance vibration of the fishing rod in the state where the plurality of rod bodies are connected to each other as one fishing rod after specifying the resonance characteristics; and
   forming the rod bodies that are tubular members composing the fishing rod by burning said selected prepreg material that is wound around a core member and is adjusted to weight distribution in the axial direction of said prepreg material to achieve said calculated weight balance.

7. A method for manufacturing a fishing rod including a plurality of connected rod bodies comprising steps of:

   specifying flexural rigidity by selecting a prepreg material that composes a material, and calculating weight balance of the rod bodies required for resonance characteristics in the third resonance frequency of the fishing rod in the state where the plurality of rod bodies are connected to each other as one fishing rod after specifying the resonance characteristics; and

forming the rod bodies that are tubular members composing the fishing rod by burning said selected prepreg material that is wound around a core member and is adjusted to weight distribution in the axial direction of said prepreg material to achieve said calculated weight balance.

8. A method for manufacturing a fishing rod including a plurality of connected rod bodies comprising steps of:

   selecting a prepreg material that composes a material, and calculating weight balance of the rod bodies required for the fishing rod to have secondary resonance vibration characteristics, third resonance vibration characteristics, and a flexural rigidity index of the fishing rod in the state where the plurality of rod bodies are connected to each other as one fishing rod after specifying said secondary resonance vibration characteristics, third resonance vibration characteristics, and flexural rigidity index of the fishing rod; and

   forming the rod bodies that are tubular members composing the fishing rod by burning said selected prepreg material that is wound around a core member and is adjusted to weight distribution in the axial direction of said prepreg material to achieve said calculated weight balance.

9. Fishing Rod including a plurality of connected rod bodies manufactured according to anyone of claims 1 to 8.

Fig. 1

Fig. 2

Fig. 3

Fig. 4

Mode Shape in Primary Resonance Vibration

Mode Shape in Secondary Resonance Vibration

Node

Mode Shape in Third Resonance Vibration

Antinode

*Fig. 5*

Fixed end

Fig. 6

Fig. 7

*Fig. 8*

<table>
<tr><td colspan="2" align="center">**INTERNATIONAL SEARCH REPORT**</td><td>International application No.<br>PCT/JP2004/000373</td></tr>
</table>

**A. CLASSIFICATION OF SUBJECT MATTER**
Int.Cl⁷ A01K87/00

According to International Patent Classification (IPC) or to both national classification and IPC

**B. FIELDS SEARCHED**

Minimum documentation searched (classification system followed by classification symbols)
Int.Cl⁷ A01K87/00

Documentation searched other than minimum documentation to the extent that such documents are included in the fields searched
Jitsuyo Shinan Koho        1922–1996   Jitsuyo Shinan Toroku Koho   1996–2004
Kokai Jitsuyo Shinan Koho   1971–2004   Toroku Jitsuyo Shinan Koho   1994–2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 6-125681 A (Daiwa Seiko Inc.),<br>10 May, 1994 (10.05.94),<br>Full text; Figs. 1 to 7<br>(Family: none) | 1-8 |
| A | JP 2001-204305 A (Ryobi Ltd.),<br>31 July, 2001 (31.07.01),<br>Full text; Figs. 1 to 3<br>(Family: none) | 1-8 |
| A | JP 10-75688 A (Ryobi Ltd.),<br>24 March, 1998 (24.03.98),<br>Full text; Figs. 1 to 12<br>(Family: none) | 1-8 |

☒ Further documents are listed in the continuation of Box C.     ☐ See patent family annex.

| | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>24 March, 2004 (24.03.04) | Date of mailing of the international search report<br>13 April, 2004 (13.04.04) |
|---|---|
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.

PCT/JP2004/000373

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-58538 A (Fujikura Gomu Kabushiki Kaisha), 02 March, 1999 (02.03.99), Full text; Figs. 1 to 5 (Family: none) | 1-8 |
| A | CD-ROM of the specification and drawings annexed to the request of Japanese Utility Model Application No. 78168/1992(Laid-open No. 34459/1994) (DAIWA SEIKO INC.), 10 May, 1994 (10.05.94), Full text; Figs. 1 to 3 (Family: none) | 1-8 |
| A | JP 4-320637 A (DAIWA SEIKO INC.), 11 November, 1992 (11.11.92), Full text; Figs. 1 to 9 (Family: none) | 1-8 |
| A | JP 2000-83518 A (Kabushiki Kaisha Shimano), 28 March, 2000 (28.03.00), Full text; Figs. 1 to 7 (Family: none) | 1-8 |
| A | JP 2002-58393 A (Mamiya-Op Co., Ltd.), 26 February, 2002 (26.02.02), Full text; Figs. 1 to 7 (Family: none) | 1-8 |
| A | EP 0974379 A2 (DAIWA SEIKO INC.), 26 January, 2000 (26.01.00), Full text; Figs. 1 to 14 & JP 2000-93559 A | 1-8 |
| A | US 6092324 A (The Orvis Co., Inc.), 25 July, 2000 (25.07.00), Full text; Figs. 1 to 8 & JP 9-98692 A | 1-8 |
| A | Dale P. CLEMENS, Advanced Custom Rod Building, New York: Winchester Press, 1978, pages 18 to 26 | 1-8 |

Form PCT/ISA/210 (continuation of second sheet) (July 1998)